Europäisches Patentamt

European Patent Office

Office européen des brevets

(11) Publication number: **0 443 807 B1**

# EUROPEAN PATENT SPECIFICATION

(45) Date of publication of patent specification: **25.01.95** (51) Int. Cl.⁶: **A21D 6/00**, A21D 2/28

(21) Application number: **91301299.3**

(22) Date of filing: **19.02.91**

(54) Method of producing bread from preserved dough.

(30) Priority: **20.02.90 JP 38770/90**

(43) Date of publication of application:
**28.08.91 Bulletin 91/35**

(45) Publication of the grant of the patent:
**25.01.95 Bulletin 95/04**

(84) Designated Contracting States:
**AT BE CH DE ES FR GB IT LI NL SE**

(56) References cited:
**EP-A- 0 114 450
EP-A- 0 311 240
EP-A- 0 353 036
US-A- 4 847 104**

(73) Proprietor: **RHEON AUTOMATIC MACHINERY
CO. LTD.
2-3, Nozawa-machi
Utsunomiya-shi
Tochigi-ken (JP)**

(72) Inventor: **Hayashi, Torahiko
3-4 Nozawa-machi
Utsunomiya-shi,
Tochigi-ken (JP)**

(74) Representative: **Holmes, Michael John et al
Frank B. Dehn & Co.
Imperial House
15-19 Kingsway
London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a method of producing bread from preserved dough. It especially relates to a method of producing bread of a good quality from frozen and preserved dough that is first stretched, without the gluten network being damaged, and then fermented. It thereby provides consumers with bread that has excellent expanding characteristics when the preserved dough is baked immediately after it is taken out of the freezer, without needing to be thawed.

Many attempts have been made to produce bread of a good quality, particularly bread having good expansion characteristics after it is baked, from frozen and preserved dough. In the conventional method of producing frozen bread, dough is fermented, frozen, and preserved. When the preserved dough is thawed and baked, it does not sufficiently expand. To improve this, for example, adding a chemical expanding agent, an egg, or milk, has been attempted. However, it has remained an unresolved problem.

European Patent Application No. 0,311,240 discloses a method of producing frozen dough for baking or frying. In it raw materials for producing bread are mixed and kneaded to make dough, and the dough is stretched while being subjected to vibrations to cause a thixotropic effect to appear in the dough. This avoids any damage to the gluten network of the dough, and the stretched dough is frozen and preserved. Also, European Patent Application No. 0,353,036 discloses a method of producing bread from frozen dough. In this method a resting step is added before the stretching step of the method of the former Application No. 0,311,240. In the resting step, the stretched dough is maintained at temperatures of from 0°C to 16°C, for at least five minutes.

However, these methods require a complex mechanism to apply the vibrations to the dough, as for instance, an endless roller mechanism that comprises a plurality of heavy rollers and a related complex drive mechanism. Therefore, a large working space, and high producing and maintenance costs, are required.

A method for producing a bread dough suitable for baking from frozen is also described in European Patent Application No. 0,114,450. This method involves a two-step fermentation time.

Therefore, an object of this invention is to provide a method of producing preserved bread dough comprising the steps of a) mixing and kneading materials, including flour, for producing a desired type of bread, to make a dough body; b) resting said dough body; c) thinning said dough body into an elongated first form; d) cutting said first form of said dough body into two or more dough parts each having a desired second form; e) fermenting said dough parts; f) freezing said fermented dough parts; and g) preserving said frozen dough parts, characterised in that h) L-cysteine in an amount of 0.003 to 0.01 % by weight of said flour is added to said materials, in said mixing and kneading step.

Also provided according to the present invention is bread dough for freezing comprising 0.006 to 0.008% L-cysteine by weight of flour, and bread obtainable by baking dough prepared according to the method of the invention.

By this invention a certain amount of L-cysteine is added to the raw materials when they are mixed and kneaded to make a dough body. This addition softens the dough body. Therefore, it can be easily thinned into an elongated form by applying a low shearing force by a sheeting machine comprising a pair of rollers and conveyors, or a stretcher, so that the gluten network is not damaged. In other words, no free water would be separated from the bound water in the gluten protein and become ice crystals that break the fermentation bubbles when the dough is frozen. Therefore, the frozen dough body according to this invention satisfactorily expands when it is baked.

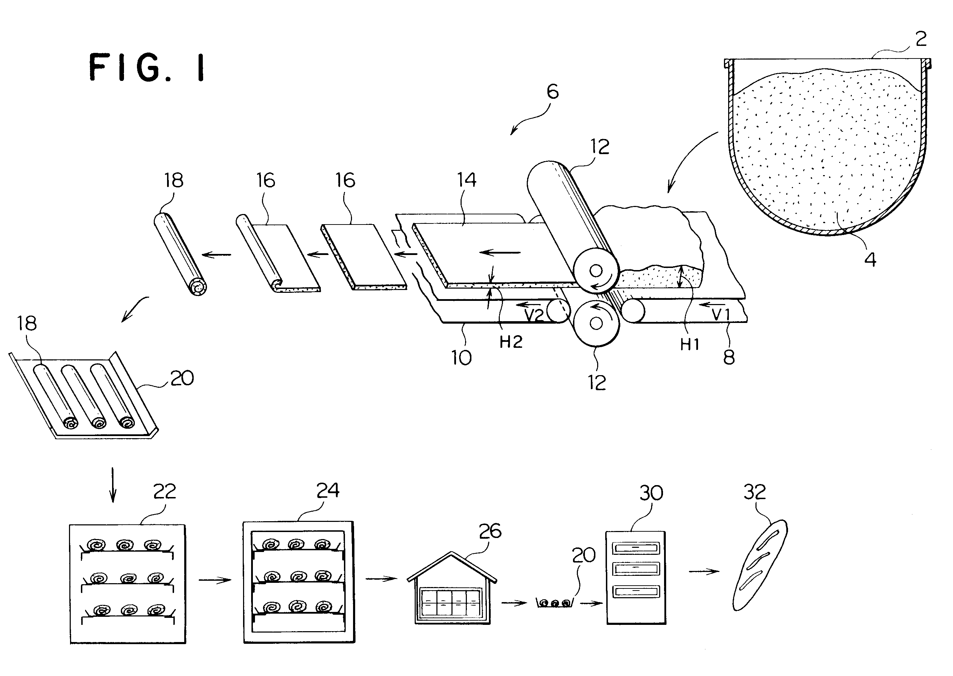

Fig. 1 is a schematic perspective view, partly in section, illustrating the sequence of the steps for producing French bread according to the method of this invention.

An embodiment of this invention will now be explained by referring to the drawing.

First, an apparatus for working the method of this invention will now be explained.

In Fig. 1, a kneader (2) for mixing and kneading materials for producing French bread is shown. The kneader (2) is provided with a rotating arm (not shown) and driven by a motor (not shown). Downstream of the kneader (2) is provided a sheeting machine (6) for compressing a dough body to stretch it into an elongated form. This machine comprises a pair of rollers (12,12) and an intake conveyor (8) and an outlet conveyor (10). The conveyors (8 and 10) are adapted to be driven by respective drive motors (not shown) such that the conveying speed V2 of the conveyor (10) is faster than that of the conveying speed V1 of the conveyor (8). Each of the pair of rollers (12,12) is rotated by a drive mechanism (not shown), each roller (12) being rotated in the same direction as the conveying direction of these conveyors (8 and 10). Downstream of the sheeting machine (6) are provided a cutter (not shown), a rolling-up device (not shown), a fermenting room (22), a freezer (24), a preserving room (26), and an oven (30).

The embodiment of this invention will now be explained.

2

The following table shows the formulation ratio of the raw materials, namely, the ingredients for French bread dough in the embodiment of this invention:

Ingredients (parts by weight)

```
Enriched wheat flour (contains 12% wheat protein): 100.0
Yeast:                                                 3.0
Salt:                                                  2.5
Sugar:                                                 2.0
Shortening:                                            2.0
Dough conditioner:                                     1.8
Water:                                                55.0
L-cysteine:           varies from 10 ppm to 120 ppm based on
                      the weight of the enriched wheat flour
```

The following table shows the processing conditions of the embodiment of this invention:

Processing conditions

```
Mixing and kneading time:                            10 minutes

Conveying speed V1 of the intake conveyor (8):        4m/min
Conveying speed V2 of the outlet conveyor (10):      20m/min
Thickness H1 of a dough body
(4)on the intake conveyor (8):                        5cm
Thickness H2 of a first form (14) of the
dough body (4) on the outlet conveyor (10):          1cm
Distance between the rollers (12,12):                0.8cm
Weight of a piece (18) of French bread dough:      100 grams
Fermenting:                                       32℃, 60minutes
Freezing:                                        -30℃, 50minutes
Preserving:                                      -18℃, one month
Baking:                                          200℃, 25minutes
```

To show the effects of adding L-cysteine to the ingredients for French bread dough, and the resting step, a series of runs were made in which the amount of L-cysteine, the resting time, and the resting temperature, were varied.

The ingredients were mixed and kneaded in the kneader (2) to be made into a dough body (4). It was then immediately transferred onto the intake conveyor (8) for runs 1 to 12. For runs 13 to 72, the dough body (4), after being kneaded, was then rested in the kneader (2) under the resting conditions shown in Tables 2 to 6. Then the dough body (4) was transferred onto the intake conveyor (8).

The dough body (4) was then continuously fed downstreram by the intake conveyor (8) at a conveying speed V1 to enter between the pair of rollers (12,12). The rollers (12,12) compressed the dough body (4) having a thickness H1. Thereby it was stretched so as to thin it into an elongated first form (14) having a thickness H2 of the dough body (4). When the dough body (4) was compressed, just a low shearing force was applied to it, because the addition of L-cysteine or the resting step softens the dough body (4). In other words, since only a tension lower than the yield point of the dough elasticity is applied to the dough body (4), the gluten network of the dough is not damaged. Thus, the bound water in the gluten protein remains unchanged during the stretching. Therefore, even if the first form (14) of the dough body (4) is fermented and frozen, the bound water in the gluten protein will not become ice crystals. Therefore, the first form (14) of the dough body (4), which contains a large number of bubbles, will satisfatorily expand when it is baked.

The dough body (4) can be stretched by, in place of the sheeting machine (6), a stretcher comprising two serially disposed conveyors, and an endless roller mechanism, including a plurality of rollers arranged above the two conveyors. The endless roller mechanism applies vibrations to the dough body to generate the thixotropic effect, so that the dough elasticity is lowered. Therefore, if this stretcher is used, adding a relatively small amount of L-cysteine will show the effects of this invention.

The first form (14) of the dough body (4) was then fed downstream by the outlet conveyor (10) at a conveying speed V2, and cut by the cutter into a dough part (16), namely, a rectangular form. The dough part (16) was then rolled up by the rolling-up device to take the form of a piece (18) of French bread dough. Pieces (18) of French bread dough were then placed on a tray (20) and fermented in a fermenting room (22) under the fermenting condition previously mentioned. The fermented pieces (18) of French bread dough were then transferred to the freezer (24) and frozen at the freezing condition previously mentioned. As mentioned above, since no free water exists in the piece (18) of French bread dough, ice crystals that would break the bubbles in the dough are not generated at the freezing step.

The frozen pieces (18) of French bread dough were then transferred to the preserving room (26) and preserved under the preserving condition previously mentioned. They were then carried by a tray (20) to the oven (30) and baked under the baling condition previously mentioned, to make a French bread product (32).

The specific volume of each French bread product (32) obtained in the series of runs 1 to 72 was measured and listed in Tables 1 to 6.

When French bread dough made without a freezing step is baked, a specific volume of at least from 4 to 4.5 cc/g is generally attained. In contrast, when French bread dough made from a fermented and frozen dough body in which fermentation bubbles are broken due to ice crystals is baked, only a specific volume of from 2.5 to 3 cc/g is attained. Therefore, in the series of runs of the embodiment of this invention a French bread product of a specific volume of 4 or more was evaluated as demonstrating the effect of this invention and a French bread product of a specific volume of less than 4 was evaluated as not demonstrating the effect of the present invention.

The following Tables 1 to 6 show the specific volume data of the series of runs 1 to 72 of the embodiment of this invention:

### Table 1

#### Specific volume (cc/g) vs. L-cysteine (ppm.)

| Run No | 1 | 2 | 3 | 4 | 5 | 6 | 7 | 8 | 9 | 10 | 11 | 12 |
|---|---|---|---|---|---|---|---|---|---|---|---|---|
| L-cysteine | 10 | 20 | 30 | 40 | 50 | 60 | 70 | 80 | 90 | 100 | 110 | 120 |
| Specific volume | | 2.1 | 3.2 | 4.0 | 4.4 | 4.5 | 4.8 | 5.0 | 4.9 | 4.8 | 4.3 | 3.3 | 2.8 |

Table 1 shows the specific volume data of runs 1 to 12, where no resting step is involved. It will be understood that runs 1 and 2, namely, where 10 and 20 ppm of L-cysteine were added, show a specific volume of 3.2 or less. Therefore, adding 10 to 20 ppm of L-cysteine, namely 0.001 to 0.002 % by weight of the flour, does not attain the effect of this invention. It will also be understood that runs 3 to 10, namely, where 30 to 100 ppm of L-cysteine were added, show a specific volume of 4 or more. Therefore, adding 30 to 100 ppm of L-cysteine, namely, 0.003 to 0.01 % by weight of the flour, attains the effect of this invention. Run 11, namely, wherein 110 ppm of L-cysteine were added, shows a specific volume of 3.3. Therefore, adding 110 ppm or more of L-cysteine unfavorably affects the specific volume data. The reason is that an excessive addition of L-cysteine causes the dough body to be excessively softened. This lowers the dough elasticity necessary to make a bread tissue when it is baked. Therefore, the softened dough body cannot

4

produce a porous and bulky baked bread. Thus, a flattened baked bread is obtained. This results in insufficient expansion characteristics for the baked bread.

### Table 2

#### Specific volume (cc/g) vs. L-cysteine (ppm.)
(Resting time: 10 mins, Resting temperature: 15°C)

| Run No | 13 | 14 | 15 | 16 | 17 | 18 | 19 | 20 | 21 | 22 | 23 | 24 |
|---|---|---|---|---|---|---|---|---|---|---|---|---|
| L-cysteine | 10 | 20 | 30 | 40 | 50 | 60 | 70 | 80 | 90 | 100 | 110 | 120 |
| Specific volume | 2.1 | 3.3 | 4.0 | 4.3 | 4.5 | 4.8 | 5.0 | 4.9 | 4.7 | 4.3 | 3.3 | 2.8 |

In runs 13 to 72 a resting step is involved. The specific volume data of runs 13 to 24 is similar to that of runs 1 to 12. Therefore, Table 2 shows that a resting step for 10 minutes and at 15°C does not favorably affect the specific volume data.

### Table 3

#### Specific volume (cc/g) vs. L-cysteine (ppm.)
(Resting time: 30 mins, Resting temperature: 20°C)

| Run No | 25 | 26 | 27 | 28 | 29 | 30 | 31 | 32 | 33 | 34 | 35 | 36 |
|---|---|---|---|---|---|---|---|---|---|---|---|---|
| L-cysteine | 10 | 20 | 30 | 40 | 50 | 60 | 70 | 80 | 90 | 100 | 110 | 120 |
| Specific volume | 2.3 | 3.5 | 4.2 | 4.5 | 4.8 | 5.1 | 5.3 | 5.3 | 4.8 | 4.4 | 3.4 | 2.9 |

It will be understood from Table 3 that runs 27 to 34, namely, adding 30 to 100 ppm of L-cysteine, show a specific volume of 4.2 or more. This data is greater than that of runs 15 to 22 of Table 2. Therefore, a resting step for 30 minutes and at 20°C favorably affects the specific volume data.

### Table 4

#### Specific volume (cc/g) vs. L-cysteine (ppm.)
(Resting time: 100 mins, Resting temperature: 40°C)

| Run No | 37 | 38 | 39 | 40 | 41 | 42 | 43 | 44 | 45 | 46 | 47 | 48 |
|---|---|---|---|---|---|---|---|---|---|---|---|---|
| L-cysteine | 10 | 20 | 30 | 40 | 50 | 60 | 70 | 80 | 90 | 100 | 110 | 120 |
| Specific volume | 2.4 | 3.6 | 4.4 | 4.6 | 4.9 | 5.2 | 5.3 | 5.4 | 4.9 | 5.0 | 3.4 | 3.0 |

It will be understood from Table 4 that runs 39 to 46, namely, adding 30 to 100 ppm of L-cysteine, show a specific volume of 4.4 or more. This data shows numbers greater than those of runs 27 to 34 of Table 3. Therefore, a resting step for 100 minutes and at 40°C also favorably affects the specific volume data.

Table 5

Specific volume (cc/g) vs. L-cysteine (ppm.)
(Resting time: 200 mins, Resting temperature: 35°C)

| Run No | 49 | 50 | 51 | 52 | 53 | 54 | 55 | 56 | 57 | 58 | 59 | 60 |
|---|---|---|---|---|---|---|---|---|---|---|---|---|
| L-cysteine | 10 | 20 | 30 | 40 | 50 | 60 | 70 | 80 | 90 | 100 | 110 | 120 |
| Specific volume | 2.4 | 3.7 | 4.4 | 4.7 | 5.0 | 5.2 | 5.4 | 5.3 | 5.0 | 4.9 | 3.5 | 2.9 |

It will be understood from Table 5 that runs 51 to 58, namely adding 30 to 100 ppm of L-cysteine, show a specific volume of 4.4 or more. This data is similar to that of runs 39 to 46 of Table 4. Therefore, a resting step for 200 minutes and at 35 °C still favorably affects the specific volume data.

Table 6

Specific volume (cc/g) vs. L-cysteine (ppm.)
(Resting time: 210 mins, Resting temperature: 50°C)

| Run No | 61 | 62 | 63 | 64 | 65 | 66 | 67 | 68 | 69 | 70 | 71 | 72 |
|---|---|---|---|---|---|---|---|---|---|---|---|---|
| L-cysteine | 10 | 20 | 30 | 40 | 50 | 60 | 70 | 80 | 90 | 100 | 110 | 120 |
| Specific volume | 2.4 | 3.6 | 3.0 | 3.3 | 3.6 | 3.6 | 3.8 | 3.5 | 3.4 | 3.4 | 3.3 | 2.8 |

It will be understood from Table 6 that runs 63 to 70, namely, adding 30 to 100 ppm of L-cysteine, show a specific volume of 3.8 or less. This data shows that even if 30 to 100 ppm of L-cysteine is used, a resting step for 210 minutes and at 50 °C unfavorably affects the expansion characteristics of French bread. The reason is that excessive fermentation by the resting step causes the dough body to be largely softened, so as to lower the dough elasticity necessary to make a bread tissue.

As was mentioned above, the addition of L-cysteine, in an amount of 0.003 to 0.01 % by weight of the flour, to the ingredients for French bread dough of this invention, causes the dough body to be softened. The dough body can be easily thinned into an elongated form by applying a low shearing force by the sheeting machine comprising a pair of rollers and conveyors, or the stretcher, so that the gluten network is not damaged. Thus, no bound water is separated from the gluten protein and so no free water is generated which could form ice crystals capable of breaking fermentation bubbles.

Therefore, the frozen dough body according to this invention satisfactorily expands when it is baked.

Further, in this invention the dough body, before it is thinned by the sheeting machine or the stretcher, is preferably rested for 30 to 200 minutes. The resting step allows the fermentation in the dough body to proceed sufficiently. This generates a large number of fermentation bubbles. Thus, the dough body can have a softening in additon to the softening effect of L-cysteine. Thus the dough body can be thinned with a shearing force lower than that applied in the thinning step where only L-cysteine is used. Therefore, the frozen dough body according to this invention also satisfactorily expands when it is baked.

Also, Tables 3, 4, and 5 show that a temperature ranging from 20 °C to 40 °C is preferable for the temperature requirement of the resting step, if 30 to 100 ppm of L-cysteine are used, and if the resting step is maintained for 30 to 200 minutes.

Although in the embodiment of this invention French bread dough is used, croissant bread dough or other bread dough can be prepared by the method of this invention.

## Claims

1. A method of producing preserved bread dough comprising the steps of:
   a) mixing and kneading materials, including flour, for producing a desired type of bread, to make a dough body (4),
   b) resting said dough body (4),
   c) thinning said dough body into an elongated first form (14),
   d) cutting said first form (14) of said dough body (4) into two or more dough parts (16) each having a desired second form,
   e) fermenting said dough parts (16),
   f) freezing said fermented dough parts (16), and
   g) preserving said frozen dough parts (16),
   characterized in that
   h) L-cysteine in an amount of from 0.003 to 0.01% by weight of said flour is added to said materials in said mixing and kneading step.

2. A method as claimed in claim 1, wherein step (c) is performed by compressing the dough body (4) between rollers and stretching the dough into an elongated first form (14).

3. A method as claimed in either of claims 1 and 2, characterized in that step (b) is carried out for 30 to 200 minutes.

4. A method as claimed in any of claims 1 to 3, wherein step (b) is performed at temperatures of from 20°C to 40°C.

5. The method as claimed in any of claims 1 to 4, wherein the amount of L-cysteine added is from 0.006 to 0.008% by weight of said flour.

6. Bread dough for freezing comprising 0.006 to 0.008% L-cysteine by weight of flour.

7. Bread dough as claimed in claim 6 obtainable by the methods as claimed in any one of claims 1 to 5.

8. Bread dough as claimed in either one of claims 6 or 7, which is suitable for producing French bread or croissants.

9. Bread obtainable by baking the dough as claimed in any one of claims 6 to 8.

## Patentansprüche

1. Eine Methode zum Herstellen von konserviertem Brotteig, welche die nachfolgenden Schritte umfasst:
   a) Vermischen und Verkneten der Ausgangsmaterialien einschließlich des Mehls zum Herstellen der gewünschten Brotsorte, um einen Rohteig (4) zu erzeugen,
   b) Ruhen des erwähnten Rohteigs (4),
   c) Ausdünnen des besagten Rohteigs zu einer ersten, gestreckten Form (14),
   d) Zerschneiden der erwähnten, ersten Form (14) des besagten Rohteigs (4) in zwei oder mehr Teigteile (16), von denen jeder eine erwünschte, zweite Form aufweist,
   e) Fermentieren der besagten Teigteile (16),
   f) Einfrieren der besagten, fermentierten Teigteile (16), und
   g) Konservieren der besagten, eingefrorenen Teigteile (16),
   **dadurch gekennzeichnet, daß**
   h) im Rahmen des besagten Schritts des Vermischens und Verknetens L-Cystein in einem Mengenanteil, der zwischen 0,003 und 0,01 Gewichtsprozent des besagten Mehls beträgt, zu den erwähnten Ausgangsmaterialien hinzugefügt wird.

2. Eine Methode, wie in Anspruch 1 beansprucht, im Rahmen derer Schritt (c) durchgeführt wird, indem der Rohteig (4) zwischen Walzen zusammengedrückt wird und der Teig in eine verlängerte, erste Form (14) gedehnt wird.

3. Eine Methode, wie in einem der Ansprüche 1 oder 2 beansprucht, dadurch gekennzeichnet, daß Schritt (b) für eine Dauer von 30 bis 200 Minuten ausgeführt wird.

4. Eine Methode, wie in irgend einem der Ansprüche 1 bis 3 beansprucht, im Rahmen derer Schritt (b) bei Temperaturen zwischen 20 °C und 40 °C durchgeführt wird.

5. Die Methode, wie in irgend einem der Ansprüche 1 bis 4 beansprucht, im Rahmen derer eine Anteilsmenge L-Cystein zwischen 0,006 und 0,008 Gewichtsprozent, bezogen auf das besagte Mehl hinzugefügt wird.

6. Brotteig zum Einfrieren, welcher bezogen auf das Mehl 0,006 bis 0,008 Gewichtsprozent L-Cystein beinhaltet.

7. Brotteig, wie in Anspruch 6 beansprucht, erhältlich mittels der Methoden, die in irgend einem der Ansprüche 1 bis 5 beansprucht werden.

8. Brotteig, wie in einem der Ansprüche 6 oder 7 beansprucht, welcher geeignet ist, um Weißbrot oder Croissants herzustellen.

9. Brot, welches durch Aufbacken des Teigs erhältlich ist, der in irgend einem der Ansprüche 6 bis 8 beansprucht wird.

**Revendications**

1. Procédé de production de pâte à pain de conserve, comprenant les étapes qui consistent :
   a) à mélanger et pétrir des matières, comprenant de la farine, pour produire un type souhaité de pain, afin de réaliser une masse de pâte (4),
   b) à laisser reposer ladite masse de pâte (4),
   c) à amincir ladite masse de pâte en une première forme allongée (14),
   d) à couper ladite première forme (14) de ladite masse de pâte (4) en deux ou plus de deux portions de pâte (16) ayant chacune une seconde forme souhaitée,
   e) à faire fermenter lesdites portions de pâte (16),
   f) à congeler lesdites portions de pâte fermentées (16), et
   g) à conserver lesdites portions de pâte congelées (16),
   caractérisé en ce que
   h) de la L-cystéine en quantité de 0,003 à 0,01 % en poids de ladite farine est ajoutée auxdites matières dans ladite étape de mélange et de pétrissage.

2. Procédé selon la revendication 1, dans lequel l'étape (c) est exécutée par compression de la masse de pâte (4) entre des rouleaux et étirage de la pâte en une première forme allongée (14).

3. Procédé selon chacune des revendications 1 et 2, caractérisé en ce que l'étape (b) est effectuée pendant 30 à 200 minutes.

4. Procédé selon l'une quelconque des revendications 1 à 3, dans lequel l'étape (b) est effectuée à des températures de 20°C à 40°C.

5. Procédé selon l'une quelconque des revendications 1 à 4, dans lequel la quantité de L-cystéine ajoutée est de 0,006 à 0,008 % en poids de ladite farine.

6. Pâte à pain à congeler comprenant 0,006 à 0,008 % de L-cystéine par rapport au poids de farine.

7. Pâte à pain selon la revendication 6 pouvant être obtenue par le procédé selon l'une quelconque des revendications 1 à 5.

8. Pâte à pain selon l'une des revendications 6 et 7, qui convient à la production de pain français ou de croissants.

9. Pain pouvant être obtenu par cuisson de la pâte selon l'une quelconque des revendications 6 à 8.

# FIG. I

EP 0 443 807 B1